# EUROPEAN PATENT SPECIFICATION

(11) **EP 2 375 521 B1**
(45) Date of publication and mention of the grant of the patent: **16.10.2013**
(21) Application number: 11161418.6
(22) Date of filing: 07.04.2011
(51) Int. Cl.: H02G 1/00, H02G 3/08

(54) **Tightening arrangement sheet for vapour barrier**
Spannanordnungsfolie für Dampfbarriere
Agencement de feuille d'étancheité pour barrière contre la vapeur

(30) Priority: 08.04.2010 NO 20100508
(43) Date of publication of application: 12.10.2011
(73) Proprietor: Elko AS, 1301 Sandvika (NO)
(72) Inventor: Kopperud, Agnar, 1394, Nesbru (NO)
(74) Representative: Acapo AS

(56) References cited:
- US-A- 4 952 754
- US-B1- 6 322 083

## Description

### Technical field of invention

The present invention relates to a method and an assembly for improving sealing between a vapour barrier in a building and installation material. Vapour barrier in connection with the present invention is to include damp barrier, diffusion barrier, wind-proofing and proofing from other elements like particles, dust, virus, bacteria, sound and other elements. Installation material signifies in particular installation boxes for electrical material but also other kinds of material for heating, ventilation and sanitation and others. Connection boxes, installation boxes and boxes comprise in connection with the present invention all kinds of such material. Sheet in the present document is intended to comprise everything from single sheets, sheets in accordion fold format, bound sheets, sheets on roll and similar.

### Background of the invention

In old times, people have been thinking that the houses should not be to impervious. At that time the insulation was rather limited, and in houses comprising many rooms, rooms that were seldom used were normally not heated. With limited control regarding barriers between hot and cold rooms, this resulted often in problems regarding moisture in the cold rooms provided they were not vented sufficiently. This again resulted in that people did not want to build too impervious but on the contrary wanted a certain venting.

For many years it has been customary with hidden installation of electrical cables including associated material. Ever increasing demand for insulation and controlling the air in buildings have resulted in increasing requirements for different solutions. In the years to come, further increasing requirements are foreseen, e.g. related to passive houses. Preferably air within the building generally gets renewed through controlled ventilation in order to avoid uncontrolled air leakage to influence the ventilation. When humid air from inside trickle out uncontrolled one run the risk of moisture condensing and creating a basis for destruction in the building construction, in addition to possibly considerable energy loss from the indoor air. Leaks like this is measurable with suitable equipment.

In order for electrical installations not to contribute to air leaks, the tightness at the place where an installation element penetrates a vapour barrier and/ or a wind-proofing barrier in the building should be secured. This is of course particularly important in external walls where the moisture and temperature inside generally are different from on the outside. In addition this also concerns moist rooms like bathrooms and rooms that may have other climate conditions such as an entrance, a cold-storage room and other rooms.

The Norwegian patent N0149856 presents a method and a device for tightening a space between a vapour barrier and a protruding object. The device is a foil film comprising deposited glue to fasten the film to the vapour barrier. The tightening of the film against the protruding object is by means of elasticity of the film having an opening for the protruding object.

One problem with this arrangement is that it is a protruding object, e.g. a prolonged or double installation box, not being circular but having a flat or even concave or inward formed circumference section, will not close and secure an opening produced after having cut open a vapour barrier.

Another problem with this arrangement is that it relies solely on the elasticity of the film, which may diminish in the cause of time and varying temperatures and may eventually disappear.

Commercially, there are some products with the purpose of sealing between a vapour barrier in a building and installation material. They have nevertheless undesirable effects that are solved by the present invention.

One product is delivered by the Danish company Dafa AS, called "DAFA universal cable collar". This product is produced as a board apparently in a rubber-apparent material and has pre-punched holes in different sizes. It is supposed to tighten towards installation boxes elastically without glue and without bending along the boxes. On the outer surface of the rubber board is fastened a sheet with glue that is to glue the board against the vapour barrier. The present invention is much simpler to produce and seems to tight better against installation material both in the short and long run.

Another product on the market is produced by the German company Gummifabrik Lubeka Gmbh & Co. This is a board produced in a soft material with a surface for gluing to the vapour barrier and it has an opening comprising a collar protruding out from an opening adapted to an installation box. The collar tights elastically to the installation box without glue. The thickness of the collar is about 1-2 mm and the hole in a wall board must have tolerance to cope for this. Materials and production costs for this product appear to make this product expensive compared to the present invention.

Yet another solution for sealing of an opening cut through a vapour barrier and where a pipe protrudes, is solved according to the patent NO327702B1 to Saint-Gobain Isover. This solution is based upon a tape with two layers, one based on a butyl like base and a carrier foil. The butyl base is generally 2 mm thick. This tape is cut in one length suitable for the pipe, folded one half of the tape lengthwise, and one of these halves is applied to the pipe. Then the rest of the tape is stretched and in this process adapted to a generally flat surface to be applied to the vapour barrier. This way of applying this sealing involves some sticky and critical operations. The present invention is quite different, is more efficient and simpler to apply.

### Summary of the invention

The main purpose of the invention is, in a simple and cost effective manner, to restrict vapour and air leakage between material and vapour barrier in the area where the vapour barrier is violated in the process of installing the material.

According to a first aspect of the present invention, there is provided a tightening arrangement sheet for material protruding a vapour barrier as claimed in appended claim 1:
characterized in that
the elastic sheet having applied adhesive thereon for gluing;
the adhesive being protected by a protective layer that may be lifted from the adhesive layer in at least one piece;
an opening in the elastic sheet comprising tongues and which can be stretched elastically around a collar of the protruding material;
the elastic sheet having adhesive glue thereon as a continuous surface comprising
the adhesive outside an outer peripheral of the opening and which may be glued to the vapour barrier; and
having a tape arrangement for securing and sealing of the border of said tongues against said collar.

### Description of the diagrams

The invention is described below with reference to the drawings.
- Fig. 1A to 1D: are different versions of installation boxes currently available (Public Art) and suitable for use with the present invention. These are merely examples and many other installation boxes are possible.
- Fig. 2: is an example of a detail in a building construction where the invention is to be used. A vapour barrier 3 is deployed at the inside, the warm side, of a wall. A hole is cut in the vapour barrier 3 in the space where the a collar 1 of an installation box protrudes. The tightening arrangement 10 is shown standing out from where its installation is intended.
- Fig. 3: is an illustration of the tightening arrangement where the protective paper 5 is partly removed and the sheet 9 produced in an elastic material comprising an adhesive surface and is stretched around the collar 1. Tongues 6 in the sheet 9 (ref. the description of Fig. 6 below) is shown along the collar 1.
- Fig. 4: illustrates protective paper 5, where strips of tape 8 are about to be lifted from and are about to be applied to seal the tongues 6 towards the collar 1.
- Fig. 5: illustrates the sheet 9. A collar 1 protrudes this sheet 9 and the tongues 6 of the sheet are sealed towards the collar 1.
- Fig. 6: illustrates the hole in the sheet 9 where the collar 1 is to protrude and the tongues 6 that then will be deflected upwards.

### Detailed description of the invention

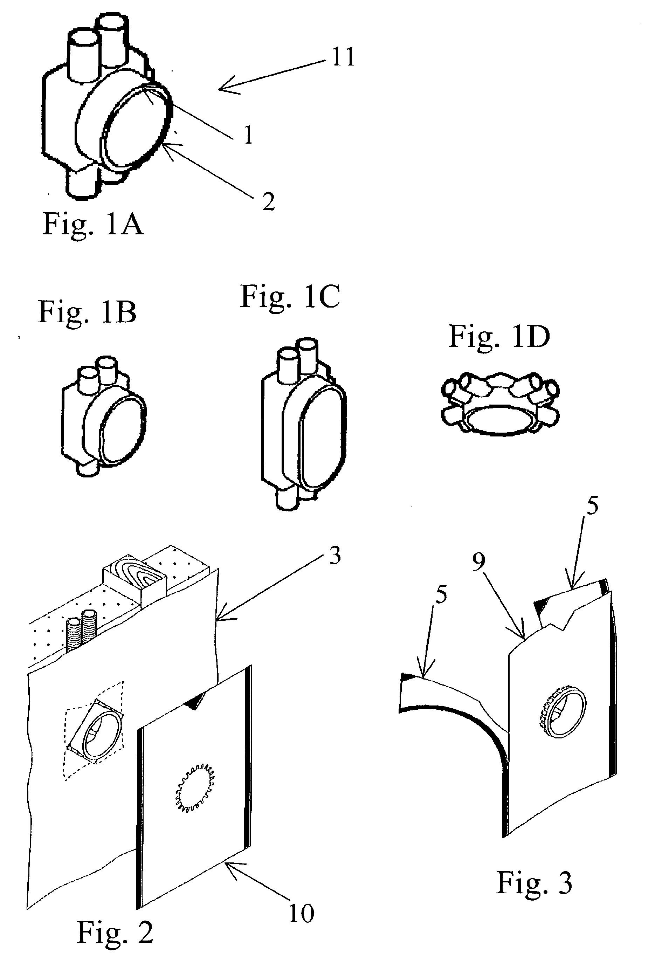

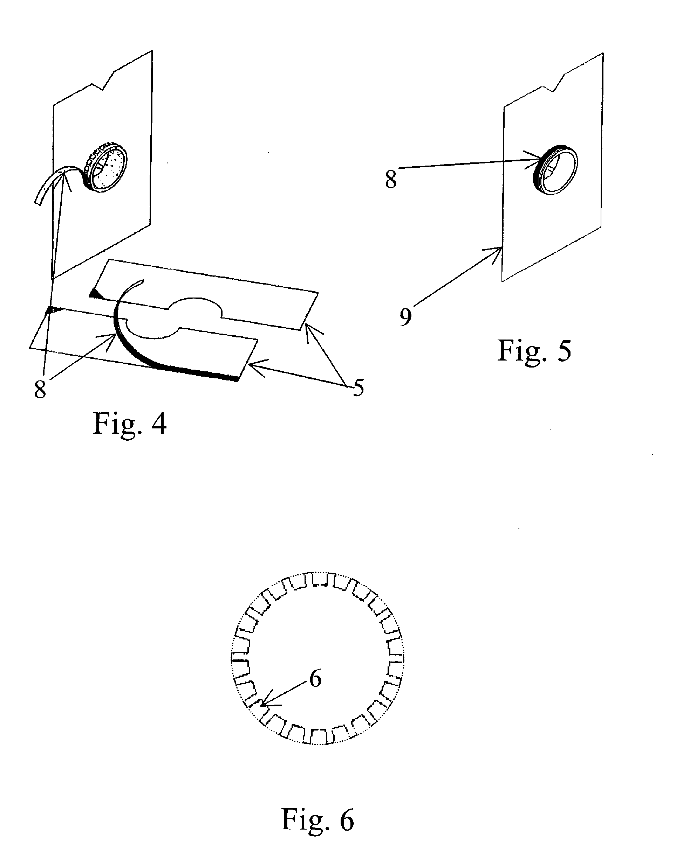

The tightening arrangement 10 comprises a sheet with multiple layers. On the top is a layer 9 made of an elastic material that again may comprise several separate parts on one surface. On the lower side of this elastic layer, a suitable adhesive or glue is applied. Information may be printed on the elastic layer for different purposes. Such information may for instance be help and explanations of the installation of the tightening arrangement 10, visual pinpointing of the different parts, information about related products and for marketing purposes. The bottom layer 5 is a protection layer that is easy to separate the rest of the layers from so that the different parts of the elastic layer having adhesive areas are ready for deployment. This layer 5 may be parted or weakened in for instance three or more parts in order to facilitate the deployment of the sheet 9. One of these parts may comprise the hole as presented in Fig. 6 through which the collar 1 of a material 11 e.g. an installation box may protrude. The remaining two parts of the protective layer 5 may consist of right and left sides respectively, for instance as indicated in Figs. 3 and 4. The borders between said three parts or more may be further detailed in order to facilitate the deployment of the elastic layer 9. Some area outside the hole which is seen in Fig. 6 may have its protective sheet remaining, when deployed for further facilitating the deployment. In the end, it is important that a continuous path of adhesive seals the elastic layer 9, all the way outside and around the circumference of the hole, to the vapour barrier. In the Figs, there is not shown any example of part of the protective sheet remaining after installation.

The tongues 6, pointing inwards on Fig. 6, may have openings between each other resulting in a suitable free space that is available for securing a sealing of the inside border of the hole in elastic layer 9 and a collar 1 protruding through the vapour barrier 3. The border between two tongues may preferably be rounded in order to reduce local strain on the elastic layer 9 when stretched.

### Embodiments of the invention

When building a house comprising temperature insulation by means of mineral wool, a vapour barrier 3 is advantageously deployed on the inside of the insulation and the building framework in the form of soft plastic foil, often made of polyethylene. Installation boxes are preferably installed before the deployment of the vapour barrier 3. Concealed electrical installations including cable conduits and installation boxes 11 are generally placed underneath such moisture barriers 3, but the collar 1 of the installation boxes 11 have to protrude the foil in order to be available inside the building. Therefore, openings are cut through the plastic foil, e.g. the vapour barrier 3. This can be seen in Fig. 2. Ever increasing requirements for improved tightening and insulation result in such cutting presents problems because the vapour barrier 3 gets damaged and less effective. Such problems are solved with the present invention.

Material in the hole on the sheet 10, including the elastic layer 9 including possible adhesive, and the protective layer 5, is removed and the rest of the sheet 10 is drawn over the collar 1 of the installation box 11. Removing this material is easy because the border of the hole, comprising the border of the tongues 6 as shown on Fig. 6, is pre-cut or pre-weakened. The hole in the elastic layer 9, defined by the outer diameter as seen on Fig. 6, is somewhat smaller than the diameter of the collar 1 so that the hole is extended elastically when the sheet 10 is drawn over the collar 1. The elastic layer 9 is then pushed further inwards on the collar 1 until it reaches the surrounding vapour barrier 3. One of the pre-cut parts of the protective layer 5 is then removed and the elastic layer comprising adhesive on at least part of the revealed surface of the elastic layer 9 is then gently pressed onto the vapour barrier 3. The same is then performed with other pre-cut parts of the protective cover 5. In order to ease the process of fastening of the elastic layer to the vapour barrier 3, some parts of the protective cover 5 may be pre-cut and left un-removed when gluing the adhesive to the vapour barrier 3. This is not shown on the Figs. This may done in order to ease the application of the elastic layer. It is important that the glued parts of the elastic layer 9 cover the whole circumference of the collar at some distance even if an un-removed protective cover 5 part remains.

The tongues 6 will point outwards along the collar 1 when the elastic layer 9 is deployed as can be seen on Fig. 4. Tape may be applied to secure and ensure sealing of the elastic layer 9 to the collar 1. The tape is then preferably applied so that the whole of the border of the tongues 6 is covered by the tape. This makes the vapour barrier not to be compromised by the hole that previously was cut in the vapour barrier 3 as indicated in Fig. 3.

In a second embodiment, the installation box may be of the 1.5 length version as shown on Fig. 1B or a double length version as shown on Fig. 1C. Particularly such boxes may have collars 1 with straight, not shown, or even concave sections, not shown. This makes the securing and ensuring of sealing between the elastic layer and the collar with tape covering the tongues 6 even more important than with monotonous round connection boxes.

## Claims

1. Tightening arrangement sheet (10) for material (11) protruding a vapour barrier (3) or a wind barrier, comprising a sheet (9),
the sheet (9) having applied adhesive thereon for gluing;
said adhesive being protected by a protective layer (5) that may be lifted from the adhesive layer in at least one piece;
an opening in the sheet (9) comprising tongues (6);
the sheet (9) having adhesive glue thereon as a continuous surface comprising the adhesive outside an outer peripheral of the opening and which may be glued to the vapour barrier (3); and
said tongues (6) arranged longitudinally along a collar (1) of the protuding material (11) so that tape can be applied for securing and sealing of the border of said tongues (6) against said collar (1), **characterized in that** the sheet (9) is produced in an elastic material and the tongues (6) can be stretched elastically around the collar (1).

2. Tightening arrangement sheet (10) as in claim 1, where the elastic sheet (9) is pre-printed with information such as instructions for use, order numbers for the present tightening arrangement sheet (10) and other related products.

3. Tightening arrangement sheet (10) as in claim 1 or 2, were the tape (8) is at least one length of tape lifted from the tightening arrangement sheet (10).

4. Tightening arrangement sheet (10) as in claim 1, 2 or 3 where the glue has a surface which is arranged so that, for a period after that the protective layer (5) is lifted off, may glide along the collar (1) of the protruding material (11), without sticking, later to stick and get attached so that the tightening is glued around collar (1) of the material (11).

5. Method for installation of tightening arrangement as in one of claims 1 - 4, **characterized in** the steps of:
removing the hole prepared in the tightening arrangement sheet (10);
guide the arrangement sheet (10) including the elastic sheet (9) and comprising the hole with the tongues (6) over the collar (1) of the protruding material (11);
letting the elastic sheet (9) comprising the hole with the tongues (6) slide inwards along the collar (1) of the protruding material (11); and fasten the tongues to the collar (1) with adhesive.

## Patentansprüche

1. Dichtungsanordnungsfolie (10) für aus einer Dampfbarriere (3) oder einer Windbarriere vorstehendes Material (11), umfassend eine Folie (9), wobei
auf der Folie (9) ein Klebstoff zum Kleben angebracht ist;
der Klebstoff durch eine Schutzschicht (5) geschützt ist, die in mindestens einem Stück von der Klebschicht abgenommen werden kann;
eine Öffnung in der Folie (9) Laschen (6) umfasst;
auf der Folie (9) ein Kleber als durchgehende Oberfläche vorhanden ist, die den Kleber außerhalb eines äußeren Rands der Öffnung umfasst und die mit der Dampfbarriere (3) verklebt werden kann; und
die Laschen (6) in Längsrichtung entlang einem Stutzen (1) des vorstehenden Materials (11) angeordnet sind, so dass ein Band angebracht werden kann, um den Rand der Laschen (6) gegen den Stutzen (1) zu befestigen und abzudichten, **dadurch gekennzeichnet, dass**
die Folie (9) aus einem elastischen Material hergestellt wird und die Laschen (6) elastisch um den Stutzen (1) herum gedehnt werden können.

2. Dichtungsanordnungsfolie (10) gemäß Anspruch 1, wobei die elastische Folie (9) mit Informationen, wie zum Beispiel Benutzungsanweisungen, Bestellnummern für die vorliegende Dichtungsanordnungsfolie (10) und für andere damit im Zusammenhang stehende Produkte bedruckt ist.

3. Dichtungsanordnungsfolie (10) gemäß Anspruch 1 oder 2, wobei das Band (8) mindestens ein von der Dichtungsanordnungsfolie (10) abgehobenes Bandstück ist.

4. Dichtungsanordnungsfolie (10) gemäß Anspruch 1, 2 oder 3, wobei der Kleber eine Oberfläche hat, die so angeordnet ist, dass für einen Zeitraum, nachdem die Schutzschicht (5) abgehoben wurde, die Oberfläche entlang dem Stutzen (1) des vorstehenden Materials (11) gleiten kann, ohne zu kleben, später dann klebt und befestigt wird, so dass die Dichtung um den Stutzen (1) des Materials (11) herum verklebt wird.

5. Verfahren zum Installieren einer Dichtungsanordnung gemäß einem der Ansprüche 1 bis 4, **gekennzeichnet durch** die folgenden Schritte:
Entfernen des in der Dichtungsanordnungsfolie (10) vorbereiteten Lochs;
Führen der Anordnungsfolie (10), die die elastische Folie (9) aufweist und das Loch mit den Laschen (6) umfasst, über den Stutzen (1) des vorstehenden Materials (11);
Gleiten-Lassen der elastischen Folie (9), die das Loch mit den Laschen (6) umfasst, nach innen entlang dem Stutzen (1) des vorstehenden Materials (11); und
Befestigen der Laschen am Stutzen (1) mit Kleber.

## Revendications

1. Agencement de feuille d'étanchéité (10) pour un matériau (11) faisant saillie d'une barrière contre la vapeur (3) ou d'une barrière contre le vent, comprenant une feuille (9),
la feuille (9) étant recouverte d'adhésif pour le collage ;
ledit adhésif étant protégé par une couche de protection (5) qui peut être soulevée de la couche adhésive en au moins une pièce ;
une ouverture dans la feuille (9) comprenant des languettes (6) ;
la feuille (9) étant recouverte de colle formant une surface continue comprenant l'adhésif à l'extérieur d'une périphérie externe de l'ouverture et qui peut être collée sur la barrière contre la vapeur (3) ; et
lesdites languettes (6) étant agencées longitudinalement le long d'un collier (1) du matériau en saillie (11), de sorte que la bande peut être appliquée pour fixer et réaliser l'étanchéité de la bordure desdites languettes (6) contre ledit collier (1), **caractérisé en ce que** la feuille (9) est produite dans un matériau élastique et les languettes (6) peuvent être étirées de manière élastique autour du collier (1).

2. Agencement de feuille d'étanchéité (10) selon la revendication 1, dans lequel la feuille élastique (9) est pré-imprimée avec des informations telles que des instructions d'utilisation, des numéros de commande pour le présent agencement de feuille d'étanchéité (10) et d'autres produits relatifs.

3. Agencement de feuille d'étanchéité (10) selon la revendication 1 ou 2, dans lequel la bande (8) est à au moins une longueur de bande levée par rapport à l'agencement de feuille d'étanchéité (10).

4. Agencement de feuille d'étanchéité (10) selon la revendication 1, 2 ou 3, dans lequel la colle a une surface qui est agencée de sorte que, pendant une période après que la couche de protection (5) a été soulevée, elle peut coulisser le long du collier (1) du matériau en saillie (11), sans coller, ni coller plus tard ni se fixer de sorte que la feuille d'étanchéité est collée autour du collier (1) du matériau (11).

5. Procédé pour l'installation d'un agencement de feuille d'étanchéité selon l'une quelconque des revendications 1 à 4, **caractérisé par** les étapes consistant à :
retirer le trou préparé dans l'agencement de feuille d'étanchéité (10) ;
guider l'agencement de feuille (10) comprenant la feuille élastique (9) et comprenant le trou avec les languettes (6) sur le collier (1) du matériau en saillie (11) ;
laisser la feuille élastique (9) comprenant le trou avec les languettes (6) coulisser vers l'intérieur le long du collier (1) du matériau en saillie (11) ; et
fixer les languettes sur le collier (1) avec l'adhésif.
